# FASCICULE DE BREVET EUROPEEN

(11) **EP 3 006 416 B1**
(45) Date de publication et mention de la délivrance du brevet: **26.12.2018**
(21) Numéro de dépôt: 15188614.0
(22) Date de dépôt: 06.10.2015
(51) Int. Cl.: C04B 28/00, C04B 40/00, C04B 111/10, C04B 111/00

(54) **PROCEDE AMELIORE POUR LA REALISATION D'UN BETON ECOLOGIQUE**
VERBESSERTES VERFAHREN ZUM HERSTELLEN VON ÖKOLOGISCHEM BETON
IMPROVED METHOD FOR PRODUCING AN ECO-FRIENDLY CONCRETE

(30) Priorité: 07.10.2014 FR 1459594
(43) Date de publication de la demande: 13.04.2016
(73) Titulaire: Centre d'Etudes et de Recherches de l'Industrie du Béton, 28233 Epernon (FR)
(72) Inventeur: JACQUEMOT, François, 78660 ABLIS (FR); ROUGEAU, Patrick, 91440 BURES SUR YVETTE (FR); DAMIDOT, Denis, 59148 FLINES LEZ RACHES (FR)
(74) Mandataire: IP Trust

(56) Documents cités:
- WO-A1-2009/005205
- WO-A1-2009/024829
- WO-A1-2014/075134
- WO-A2-2008/048617
- US-A1- 2012 152 153
- US-A1- 2014 047 999

## Description

### DOMAINE TECHNIQUE DE L'INVENTION

Le domaine des matériaux de construction, et en particulier celui des bétons, préférentiellement préfabriqués est concerné.

L'invention concerne un procédé de réalisation d'un béton à base de laitier et une composition spécifique de béton.

Le béton est destiné notamment, mais non exclusivement, à la réalisation de constructions (bâtiments et similaires) et d'infrastructures (urbaines, de transport, etc.).

### ETAT DE LA TECHNIQUE

De manière classique en soi, le béton est réalisé à partir de granulats (gravillons, sables ou similaires) agglomérés par un liant. Dans le domaine de la préfabrication, le liant couramment utilisé est le ciment Portland (le plus souvent de type CEM I), ce dernier assurant un durcissement rapide du béton et présentant en outre des propriétés satisfaisantes en termes de résistance mécanique et de durabilité. Le ciment Portland présente cependant un inconvénient majeur. Il est en effet responsable d'émissions importantes de gaz carbonique lors de sa production (une tonne de ciment Portland génère en moyenne plus de 0,8 tonne de dioxyde de carbone du fait de la présence de clinker dans le ciment et de la réaction de clinkerisation associée se produisant lors de sa production).

Compte tenu des préoccupations croissantes en matière de développement durable, des liants à teneur réduites en clinker se développent. Ainsi des liants alternatifs à base de laitier, parfois associés à des matériaux pouzzolaniques, tels que les CEM II/A-S, CEM II/B-S, CEM III, CEM V, un mélange de CEM I ou de CEM II avec du laitier de haut fourneau, ou d'autres liants exempts de clinker Portland, commencent à être employés. A titre d'exemple, il peut être cité la demande WO2008/048617 laquelle divulgue un béton comprenant un laitier à activation alcaline, des granulats et éventuellement du natron. Le béton de la demande précitée est obtenu en mélangeant les composants susmentionnés avec un composant liquide puis en maintenant le mélange obtenu à température ambiante (comprise entre 18 °C et 23°C) jusqu'au durcissement du béton. Il peut être également cité la demande WO2014/075134 laquelle divulgue un béton géopolymère à base de laitier de haut fourneau.

Si ces liants alternatifs au ciment Portland permettent de réduire l'émission de gaz carbonique, ils s'avèrent cependant moins réactifs que le ciment Portland en ce sens qu'ils présentent une cinétique de durcissement plus lente.

L'invention vise à remédier aux problèmes des bétons présentés ci-dessus en proposant un procédé permettant l'obtention d'un béton présentant des propriétés équivalentes au ciment Portland en termes de résistance mécanique à court terme et de cinétique de durcissement du béton tout en présentant un impact environnemental réduit, notamment en termes d'émissions de dioxyde de carbone.

L'invention a également pour objet de proposer un procédé permettant la réalisation d'un béton notamment préfabriqué.

L'invention a également pour objet un béton, et notamment mais non exclusivement un béton préfabriqué, ayant une résistance mécanique à court terme équivalente à celles du béton préparé à base de ciment Portland.

### OBJET DE L'INVENTION

A cet effet, et selon un premier aspect, l'invention propose un procédé de réalisation d'un béton à partir d'un mélange comprenant un laitier, un activateur alcalin à base de carbonate de sodium, des granulats et de l'eau, ledit mélange étant exempt de clinker, ledit procédé comprenant un traitement thermique du mélange dans lequel le mélange est soumis à une température de consigne comprise entre 50 degrés Celsius et 90 degrés Celsius pendant une durée déterminée comprise entre 1 à 12 heure(s).

Un tel procédé permet d'offrir une cinétique de durcissement du béton équivalente à celle du ciment Portland alors même que le liant est exempt de clinker. Cet effet est obtenu de manière surprenante en soumettant un mélange comprenant un liant à base de laitier et un activateur alcalin à base de carbonate de sodium à une température supérieure à la température ambiante pendant une durée déterminée. Il est apparu en effet que sous l'action de la température dans la plage susmentionnée, une accélération du durcissement du béton se produisait.

Le procédé selon l'invention permet ainsi d'obtenir un béton présentant des propriétés équivalentes au ciment Portland, et en particulier un béton présentant à l'état durci après l'étape de traitement thermique, une résistance à la compression supérieure à 20 MPa mesurée selon la norme NF EN 196-1, tout en garantissant des émissions réduites de dioxyde de carbone du fait du liant utilisé (liant à base de laitier).

Plus particulièrement, le procédé comporte une étape de préparation du mélange à partir d'au moins un laitier, un activateur alcalin à base de carbonate de sodium et d'eau, suivie d'une étape de remplissage d'au moins un moule avec le mélange ainsi préparé, elle-même suivie d'un traitement thermique du mélange placé dans le moule, le béton étant démoulé une fois durci.

Selon l'invention, le mélange est préalablement soumis à une température, dite température de prétraitement, inférieure à la température de consigne, et comprise entre 35 degrés Celsius et 45 degrés Celsius, pendant une durée comprise entre 0 et 2 heures suivie d'une montée en température réalisée à une vitesse comprise entre 15 et 45 degrés Celsius / heure jusqu'à la température de consigne. Ces opérations préalablement à la phase de traitement à la température de consigne ont pour avantage de limiter la formation de fissures au sein du béton au cours de son durcissement. Plus particulièrement, la phase de pré-traitement précède la phase de traitement à la température de consigne.

Avantageusement, le mélange est soumis à une température de consigne comprise entre 60 et 80 degrés Celsius pendant une durée comprise entre 1 et 4 heure(s).

Avantageusement, le mélange est réalisé avec du carbonate de sodium dans une proportion de 2% à 8% exprimé en masse de Na₂O par rapport à la masse de laitier et avec de l'eau dans une proportion de 30% à 65% de laitier.

Afin d'optimiser l'accélération du durcissement du béton, il peut être prévu d'ajouter, lors de la réalisation du mélange, un carbonate de magnésium finement divisé dans une proportion par rapport au laitier allant jusqu'à 15%.

Il peut être prévu également d'ajouter, lors de la préparation du mélange, des additions minérales finement divisées, et de préférence des additions calcaires. Les additions minérales permettent d'améliorer certaines propriétés du béton. En particulier, les additions calcaires permettent d'améliorer la fluidité du béton. Avantageusement, les additions minérales sont choisies parmi celles définies dans les normes EN 450-1 ou EN 13263-1 ou NF P 18-508 ou NF P 18-509 ou NF P 18-513. Selon un mode de réalisation particulier, les additions minérales sont ajoutées dans le mélange dans une proportion par rapport au laitier allant jusqu'à 40 %.

Il peut être prévu également d'ajouter, lors de la préparation du mélange, au moins un adjuvant dans une proportion par rapport au laitier allant jusqu'à 5%. L'adjuvant ajouté est essentiellement du type entraineur d'air ou du type fluidifiant. Ce dernier a pour fonction de fluidifier le béton frais ou de diminuer la quantité d'eau présente dans le béton pour améliorer sa compacité et ses propriétés de résistance mécanique. L'adjuvant est avantageusement choisi parmi ceux définis dans la norme EN 934-2.

Avantageusement, les granulats sont ajoutés dans le mélange dans une proportion de 200% à 600% de laitier. Les granulats sont choisis de préférence parmi ceux définis dans les normes EN 12620 ou EN 13055-1.

Avantageusement, le laitier est un laitier de haut fourneau présentant de préférence une granulométrie inférieure à 100 µm. Cela permet ainsi d'améliorer la réactivité du mélange au cours du traitement thermique. Le laitier de haut fourneau est avantageusement choisi parmi ceux définis dans la norme 15167-1.

Concerné est également un béton formé d'un mélange comprenant un laitier, un activateur alcalin à base de carbonate de sodium, des granulats et de l'eau, ledit mélange étant exempt de clinker, ledit béton présentant en outre, à l'état durci après traitement thermique, une résistance à la compression supérieure à 20 MPa mesurée selon la norme NF EN 196-1.

Avantageusement, le mélange comprend du carbonate de sodium dans une proportion de 2% à 8% exprimé en masse de Na₂O par rapport à la masse de laitier et de l'eau dans une proportion de 30% à 65% de laitier.

Avantageusement, le mélange comprend en outre un carbonate de magnésium finement divisé dans une proportion par rapport au laitier allant jusqu'à 15%.

Avantageusement, le mélange comprend des additions minérales finement divisées, et de préférence des additions calcaires. Avantageusement, les additions minérales sont choisies parmi celles définies dans les normes EN 450-1 ou EN 13263-1 ou NF P 18-508 ou NF P 18-509 ou NF P 18-513. Avantageusement, le mélange comprend des additions minérales dans une proportion par rapport au laitier allant jusqu'à 40 %.

Avantageusement, le mélange comprend au moins un adjuvant dans une proportion par rapport au laitier allant jusqu'à 5%. L'adjuvant est avantageusement choisi parmi ceux définis dans la norme EN 934-2.

Avantageusement, les granulats sont choisis parmi ceux définis dans les normes EN 12620 ou EN 13055-1. Il peut être prévu un mélange comprenant des granulats dans une proportion de 200% à 600% de laitier.

Avantageusement, le laitier est un laitier de haut fourneau. Afin d'augmenter la réactivité du laitier, le laitier choisi présente de préférence une granulométrie inférieure à 100 µm. Le laitier de haut fourneau est avantageusement choisi parmi ceux définis dans la norme 15167-1.

Concerné est également un béton obtenu selon le procédé de réalisation précédemment décrit, ledit béton reprenant en tout ou partie les caractéristiques de la composition du béton précédemment décrites.

L'invention est illustrée par les exemples non limitatifs suivants. Les résistances mécaniques sont mesurées selon la norme NF EN 196-1. L'indicateur de changement climatique est déterminé en retenant comme hypothèse qu'il n'y a pas d'allocation d'impact lié à la production de fonte sur le laitier. Seuls les impacts de la production des constituants et de la cure thermique ont été considérés dans cette approche, les autres postes du cycle de vie ayant été négligés.

### EXEMPLES 1 à 6 - Comparaison de bétons comprenant un liant du type CEM I-52.5 et de bétons selon l'invention

Six bétons ont été préparés selon le procédé suivant :
- A l'instant t₀, les constituants solides sont mélangés dans un malaxeur avec l'eau dans laquelle le carbonate de sodium a préalablement été dissout. La constitution des mélanges est précisée dans le tableau ci-dessous et dans lequel Ex1 :

| | Ex1 | Ex2 | Ex3 | Ex4 | Ex5 | Ex6 |
|---|---|---|---|---|---|---|
| Proportions massiques (g) | | | | | | |
| Laitier de haut fourneau Ecocem Fos/mer | | 225 | 450 | 405 | 450 | 450 |
| Hydromagnésite Chimie Plus Laboratoires | | | | 45 | | |
| Ciment CEM I 52,5 N Lafarge Le Teil | 450 | 225 | | | | |
| Na₂CO₃ Panreac (dont Na₂O) | | | 30,8 (18,0) | 27,7 (16,2) | 30,8 (18,0) | 46,2 (27) |
| Adjuvant superplastifiant Tillman polyflow S550 | | | | | 22,5 | |
| Eau totale (dont eau ajoutée) | 225 (225) | 225 (225) | 225 (225) | 225 (225) | 166,7 (148,5) | 225 (225) |
| Sable CEN 0/2 mm Société nouvelle du littoral | 1350 | 1350 | 1350 | 1350 | 1350 | 1350 |
| où : | | | | | | |
| - Ex1 est à base de ciment Portland CEM I ; | | | | | | |
| - Ex2 est à base d'un mélange de 50% de CEM I et 50% de laitier ; | | | | | | |
| - Ex3 est à base de laitier avec 4% de carbonate de sodium ; | | | | | | |
| - Ex4 est à base de laitier avec 4% de carbonate de sodium et 11% de carbonate de magnésium ; | | | | | | |
| - Ex5 est à base de laitier avec 4% de carbonate de sodium et une teneur réduite en eau (ratio eau/laitier = 0,37) ; | | | | | | |
| - Ex6 est à base de laitier avec 6% de carbonate de sodium. | | | | | | |

- Le mélange frais est versé dans des moules. L'ensemble est ensuite vibré pour assurer un parfait remplissage puis est mis en étuve dans lequel il subit un traitement thermique TT65 défini dans le tableau suivant. Le béton est protégé de la dessiccation.

| **Traitement thermique** | **TT65** |
|---|---|
| Phase de pré-traitement | Température de pré-traitement = 35 °C, Durée = 1 h |
| Phase de montée en température | Vitesse = 20 °C/h |
| Phase de traitement à la température de consigne | Température de consigne = 65 °C, Durée = 3,5 h |
| Phase de refroidissement | Durée = 1 h |

- Au sortir du traitement thermique, le béton est démoulé et est testé mécaniquement aux échéances de t₀+8 heures et T₀+28 jours. Les caractéristiques sont présentées dans le tableau suivant :

| | Ex1 | Ex2 | Ex3 | Ex4 | Ex5 | Ex6 |
|---|---|---|---|---|---|---|
| Caractéristiques | | | | | | |
| Résistance en compression à t₀+8 heures (MPa) | 23,4 | 13,3 | 25,3 | 34,0 | 34,1 | 27,0 |
| Résistance en compression à t₀+28 jours (MPa) | 65,5 | 52,9 | 38,2 | 51,6 | 63,4 | 47,6 |
| Indicateur de changement climatique (kg_{eq}CO₂/m³) | 475 | 254 | 47 | 97 | 75 | 54 |

On peut noter que les bétons selon l'invention (Ex3 à Ex6) présentent des résistances à l'échéance de t₀+8 heures, soit au sortir du traitement thermique, supérieure à celles obtenues avec du ciment Portland de type CEM I 52,5 N (Ex1). De plus, ils présentent un impact environnemental (en termes d'émission de CO₂) plus faible. L'Ex2 présente également un impact environnemental plus faible que l'Ex1 mais ses performances mécaniques à t₀+8 heures ne sont pas équivalentes à l'Ex1.

### EXEMPLES 7 ET 8 - Comparaison d'un béton préparé selon le procédé de l'invention (avec traitement thermique) et d'un béton ne bénéficiant pas d'un traitement thermique.

Deux bétons ont été préparés selon le procédé suivant :
- A l'instant t₀, les constituants solides sont mélangés dans un malaxeur avec l'eau dans laquelle le carbonate de sodium a préalablement été dissout. La constitution des mélanges est identique à l'Ex3.
- Le mélange frais est versé dans des moules. L'ensemble est ensuite vibré pour assurer un parfait remplissage. Une partie de l'ensemble est ensuite mis en étuve où il bénéficie d'un traitement thermique TT80 défini dans le tableau ci-après (Ex7) tandis que l'autre partie de l'ensemble ne bénéficie pas d'un traitement thermique et durcit à température ambiante (Ex8). Les bétons sont protégés de la dessiccation.

| Traitement thermique | TT80 |
|---|---|
| Phase de pré-traitement | Température de pré-traitement = 35 °C, Durée = 1 h |
| Phase de montée en température | Vitesse = 20 °C/h |
| Phase de traitement à la température de consigne | Température de consigne = 80 °C, Durée = 2,75 h |
| Phase de refroidissement | Durée = 1 h |

- Au sortir du traitement thermique, le béton est démoulé et est testé mécaniquement aux échéances de t₀+8 heures et t₀+28 jours. Les caractéristiques sont présentées dans le tableau suivant :

| | Ex7 | Ex8 |
|---|---|---|
| Caractéristiques | | |
| Résistance en compression à t₀+8 heures (MPa) | 22,9 | 0,0 |
| Résistance en compression à t₀+28 jours (MPa) | 30,5 | 33,6 |
| Indicateur de changement climatique (kg_{eq}CO₂/m³) | 52 | 27 |

On peut noter que le béton de l'Ex7 selon l'invention présente des résistances à l'échéance de t0+8 heures comparables à celles de l'Ex1 et un moindre impact environnemental en termes d'émission de CO₂. Lorsque le procédé d'obtention du béton n'inclut pas de traitement thermique (Ex8), ses performances mécaniques à court terme sont très inférieures à l'Ex1.

### EXEMPLE 9 - Comportement d'un béton réalisé sans phase de pré-traitement

Un béton a été préparé selon le procédé suivant :
- A l'instant t₀, les constituants solides, y compris le carbonate de sodium, sont mélangés dans un malaxeur avec l'eau. La constitution du mélange est précisée dans le tableau ci-dessous :

| | Ex9 |
|---|---|
| Proportions massiques (g) | |
| Laitier de haut fourneau Orcem Moerdijk | 450 |
| Na₂CO₃ Solvay | 49,5 |
| (dont Na₂O) | (29,0) |
| Adjuvant superplastifiant BASF Glenium Sky 537 | 9,0 |
| Eau totale | 225 |
| (dont eau ajoutée) | (218) |
| Sable CEN 0/2 mm | 1350 |
| Société nouvelle du littoral | |

- Le mélange frais est versé dans des moules. L'ensemble est ensuite vibré pour assurer un parfait remplissage puis est mis en étuve où il bénéficie d'un traitement thermique à une température de consigne constante égale à 80 °C pendant 2 heures.
- Au sortir du traitement thermique, le béton est démoulé et est testé mécaniquement aux échéances de t₀+2 heures et t₀+28 jours. Les caractéristiques sont présentées dans le tableau suivant :

| | Ex9 |
|---|---|
| Caractéristiques | |
| Résistance en compression à t₀+2 heures (MPa) | 31,7 |
| Résistance en compression à t₀+28 jours (MPa) | 47,1 |
| Résistance en flexion à t₀+2 heures (MPa) | 5,2 |
| Résistance en flexion à t₀+28 jours (MPa) | 5,5 |
| Indicateur de changement climatique (kg_{eq}CO₂/m³) | 45 |

On peut noter que le béton de l'Ex9 présente des résistances à l'échéance de t₀+2 heures supérieures à celles de l'Ex1 à l'échéance de t₀+8 heures ainsi qu'un moindre impact environnemental en termes d'émission de CO₂.

Les exemples qui précèdent se rapportent à des bétons fabriqués à partir de sable. Il est bien entendu évident que le béton selon l'invention ne se limite pas à ce type de granulat et qu'il peut être réalisé à partir de matières présentant une granulométrie supérieure à celle d'un sable ou à partir d'un mélange de granulats de différentes granulométries.

## Revendications

1. Procédé de réalisation d'un béton préparé à partir d'un mélange comprenant un laitier, un activateur alcalin à base de carbonate de sodium, des granulats et de l'eau, ledit mélange étant exempt de clinker, ledit procédé comprenant un traitement thermique du mélange dans lequel le mélange est soumis à une température de consigne constante comprise entre 50 degrés Celsius et 90 degrés Celsius pendant une durée comprise entre 1 à 12 heure(s), **caractérisé en ce que** le mélange est préalablement soumis à une température de pré-traitement comprise entre 35 et 45 degrés Celsius pendant une durée comprise entre 0 et 2 heures suivie d'une montée en température réalisée à une vitesse comprise entre 15 et 45 degrés Celsius / heure jusqu'à la température de consigne.

2. Procédé selon la revendication 1, **caractérisé en ce que** le mélange est soumis à une température de consigne comprise entre 60 et 80 degrés Celsius pendant une durée comprise entre 1 et 4 heure(s).

3. Procédé selon la revendication 1 ou la revendication 2, **caractérisé en ce que** le mélange est réalisé avec du carbonate de sodium dans une proportion de 2% à 8% exprimé en masse de Na₂O par rapport à la masse de laitier et avec de l'eau dans une proportion de 30% à 65% de laitier.

4. Procédé selon l'une quelconque des revendications 1 à 3, **caractérisé en ce que** le mélange est réalisé avec des granulats dans une proportion de 200% à 600% de laitier.

5. Procédé selon l'une quelconque des revendications 1 à 4, **caractérisé en ce qu'**il est ajouté au mélange, lors de sa préparation, un carbonate de magnésium dans une proportion par rapport au laitier allant jusqu'à 15%.

6. Procédé selon l'une quelconque des revendications 1 à 5, **caractérisé en ce que** le laitier est un laitier de haut fourneau présentant une granulométrie inférieure à 100 µm.

7. Procédé selon l'une quelconque des revendications 1 à 6, **caractérisé en ce que** le béton obtenu présente, à l'état durci après traitement thermique, une résistance à la compression supérieure à 20 MPa mesurée selon la norme NF EN 196-1.

8. Procédé selon l'une quelconque des revendications 1 à 7, **caractérisé en ce que** le mélange comprend en outre des additions minérales finement divisées.

9. Procédé selon la revendication 8, **caractérisé en ce que** les additions minérales sont présentes dans le mélange dans une proportion par rapport au laitier allant jusqu'à 40 %.

10. Procédé selon l'une quelconque des revendications 1 à 8, **caractérisé en ce que** le mélange comprend au moins un adjuvant dans une proportion par rapport au laitier allant jusqu'à 5%.

## Patentansprüche

1. Herstellungsverfahren eines aus einer Mischung zubereiteten Betons, die eine Schlacke, einen alkalischen Aktivator basierend auf Natriumkarbonat, Granulaten und Wasser umfasst, wobei die genannte Mischung frei ist von Zementklinker, wobei das genannte Verfahren eine thermische Behandlung der Mischung umfasst, in der die Mischung während einer zwischen 1 und 12 Stunde(n) inbegriffenen Dauer einer zwischen 50 Grad Celsius und 90 Grad Celsius inbegriffenen konstanten Solltemperatur unterworfen ist, **dadurch gekennzeichnet, dass** die Mischung zuvor während einer zwischen 0 und 2 Stunden inbegriffenen Dauer einer zwischen 35 und 45 Grad Celsius inbegriffenen Vorverarbeitungstemperatur unterworfen ist, gefolgt von einem Temperaturanstieg, der bei einer zwischen 15 und 45 Grad Celsius inbegriffenen Geschwindigkeit / Stunden bis zur Solltemperatur realisiert ist.

2. Verfahren gemäß Anspruch 1, **dadurch gekennzeichnet, dass** die Mischung während einer zwischen 1 und 4 Stunde(n) inbegriffenen Dauer einer zwischen 60 und 80 Grad Celsius inbegriffenen Temperatur unterworfen ist.

3. Verfahren gemäß Anspruch 1 oder Anspruch 2, **dadurch gekennzeichnet, dass** die Mischung mit Natriumkarbonat in einem Verhältnis von 2 % bis 8 %, der in der Masse des Na₂O im Verhältnis zur Schlackenmasse ausgedrückt ist, und mit einem Verhältnis von 30 % bis 65 % Schlacke realisiert ist.

4. Verfahren gemäß irgendeinem der Ansprüche 1 bis 3, **dadurch gekennzeichnet, dass** die Mischung mit Granulaten in einem Verhältnis von 200 % bis 600 % Schlacke realisiert ist.

5. Verfahren gemäß irgendeinem der Ansprüche 1 bis 4, **dadurch gekennzeichnet, dass** bei ihrer Zubereitung ein Magnesiumkarbonat in einem Verhältnis von bis zu 15 % im Verhältnis zur Schlacke zu der Mischung hinzugefügt wird.

6. Verfahren gemäß irgendeinem der Ansprüche 1 bis 5, **dadurch gekennzeichnet, dass** die Schlacke eine Hochofenschlacke ist, die eine Körnung von weniger als 100 µm aufweist.

7. Verfahren gemäß irgendeinem der Ansprüche 1 bis 6, **dadurch gekennzeichnet, dass** der erhaltene Beton im gehärteten Zustand nach der Wärmebehandlung einen Kompressionswiderstand von mehr als 20 MPa, gemessen gemäß der Norm NF EN 196-1, aufweist.

8. Verfahren gemäß irgendeinem der Ansprüche 1 bis 7, **dadurch gekennzeichnet, dass** die Mischung darüber hinaus fein verteilte mineralische Zusätze umfasst.

9. Verfahren gemäß Anspruch 8, **dadurch gekennzeichnet, dass** die mineralischen Zusätze in der Mischung in einem Verhältnis von bis zu 40 % im Verhältnis zur Schlacke vorhanden sind.

10. Verfahren gemäß irgendeinem der Ansprüche 1 bis 8, **dadurch gekennzeichnet, dass** die Mischung wenigstens einen Zusatz in einem Verhältnis von bis zu 5 % im Verhältnis zur Schlackt umfasst.

## Claims

1. A method for making a concrete prepared from a mixture comprising a slag, a sodium carbonate-based alkali activator, aggregates and water, with said mixture being free of clinker, with said method comprising a heat treatment of the mixture, wherein the mixture is subjected to a constant set temperature between 50 degrees Celsius and 90 degrees Celsius for a specified time from 1 to 12 hour(s), **characterized in that** the mixture is previously subjected to a pre-treatment temperature ranging from 35 to 45 degrees Celsius for a specified time from 0 to 2 hours, followed by a rise in temperature at a speed ranging from 15 to 45 degrees Celsius/hour up to the set temperature.

2. A method according to claim 1, **characterized in that** the mixture is subjected to a set temperature ranging from 60 to 80 degrees Celsius for a specified time ranging from 1 to 4 hour(s).

3. A method according to claim 1 or claim 2, **characterized in that** the mixture is made with sodium carbonate in a proportion of 2% to 8% by weight of Na₂O based on the slag mass, and with water in a proportion of 30% to 65% based on slag.

4. A method according to any one of claims 1 to 3, **characterized in that** the mixture is made with aggregates in a proportion of 200% to 600% based on slag.

5. A method according to any one of claims 1 to 4, **characterized in that** magnesium carbonate is added to the mixture, during the preparation thereof, in a proportion of up to 15% based on slag.

6. A method according to any one of claims 1 to 5, **characterized in that** the slag is a blast furnace slag having a particle size smaller than 100µm.

7. A method according to any one of claims 1 to 6, **characterized in that** the concrete obtained has, in the cured state after the heat treatment, a compressive strength above 20MPa as measured according to the NF EN 196-1 standard.

8. A method according to any one of claims 1 to 7, **characterized in that** the mixture further comprises finely divided mineral admixtures.

9. A method according to claim 8, **characterized in that** the mineral admixtures are present in the mixture in a proportion of up to 40% based on slag.

10. A method according to any one of claims 1 to 8, **characterized in that** the mixture comprises at least one additive in a proportion of up to 5% based on slag.
